# EUROPÄISCHE PATENTSCHRIFT

(11) **EP 0 681 789 B1**
(45) Veröffentlichungstag und Bekanntmachung des Hinweises auf die Patenterteilung: **24.10.2001**
(21) Anmeldenummer: 95106354.4
(22) Anmeldetag: 27.04.1995
(51) Int. Cl.: A23L 1/236

(54) **Süssungsmittel mit verbessertem saccharoseähnlichem Geschmack sowie Verfahren zu dessen Herstellung und dessen Verwendung**
Sweetener with an improved saccharose-like taste; process for preparing it; uses thereof
Edulcorant ayant un goût amélioré semblable au saccharose; procédé pour la préparation; ses applications

(30) Priorität: 10.05.1994 DE 4416429
(43) Veröffentlichungstag der Anmeldung: 15.11.1995
(73) Patentinhaber: Nutrinova Nutrition Specialties & Food Ingredients GmbH, 65929 Frankfurt am Main (DE)
(72) Erfinder: Lotz, Andreas, Dr., D-65779 Kelkheim (DE); Böhshar, Manfred, Dr., D-65779 Kelkheim (DE)
(74) Vertreter: Schweitzer, Klaus, Dr.

(56) Entgegenhaltungen:
- EP-A- 0 065 462
- EP-B- 0 319 984
- WO-A-89/04165
- DE-A- 2 556 109
- FR-A- 2 315 864
- FR-A- 2 479 656
- Römpp Lexikon Chemie, Band Naturstoffe, Hrsg. W. Steglich et al, Thieme Verlag Stuttgart, 1997, Seite 177
- H.-D. BELITZ, W. GROSCH: "Lehrbuch der Lebensmittelchemie", 2. Auflage, Springer-Verlag, Berlin, Heidelberg, New York, Tokyo, 1985, S. 340-343

## Beschreibung

Die Erfindung bezieht sich auf ein Süßungsmittel mit verbessertem saccharoseähnlichem Geschmack sowie ein Verfahren zur Herstellung und Verwendung dieses Süßungsmittels.

Süßstoffe mit geringem Nährwert werden zunehmend anstelle von Zucker zur Verminderung der Kalorienzufuhr, aus diätetischen oder medizinischen Gründen verwendet. Sie zeichnen sich bekanntlich durch eine sehr viel höhere Süßkraft als die natürlich vorkommenden Zucker aus. Sie sind deshalb sehr gut zum Süßen von Lebensmitteln und Getränken geeignet. Nachteilig ist, daß alle Süßstoffe bei Einstellung einer stärkeren Süße einen mehr oder weniger starken Beigeschmack zeigen. Auch die Geschmacksqualität der Süße weicht in der Regel von derjenigen der Saccharose ab, die durch lange Gewöhnung zum Leitbild für die Beurteilung der Süße geworden ist.

Zur Maskierung des Beigeschmacks hat man den Süßstoffen bereits eine Anzahl verschiedener nicht süßschmeckender Zusätze wie z.B. Maltol, Ethylmaltol, Citronensäure, Weinsäure oder Chininsulfat beigemischt (DE-OS 20 60 634). Diese Mittel sind hauptsächlich zur Maskierung des Beigeschmacks des Saccharins beschrieben worden. Weiterhin sind aus der DE-PS 25 60 544 und DE-OS 25 56 109 modifizierte Süßstoffe bekannt. Hier werden bekannte Süßstoffe wie Aspartam und Cyclamat mit Geschmacksmodifizierern wie Kaliumaluminiumsulfat oder Naringin versetzt, um den Nachgeschmack der Süßstoffe zu modifizieren.

Zur Verbesserung der Geschmacksqualität von Süßstoffen werden auch Süßstoffmischungen eingesetzt. Die DE-AS 26 28 294 offenbart Süßstoffmischungen mit verbessertem saccharoseähnlichem Geschmack. Hierin wird beschrieben, daß sich die Qualität der Süßstoffe und die Saccharoseähnlichkeit der Süßstoffe durch das Abmischen mit anderen Süßstoffen verbessern läßt. Ein Grund für die Verwendung von Süßstoffmischungen besteht darin, daß einige der bekannten Süßstoffe ihre Süße auf der Zunge stark verzögert entfalten oder aber einen sehr schnellen Süßeeindruck bewirken, der jedoch auch schnell abflacht. Dieser Nachteil läßt sich durch Beimischung von Süßstoffen mit länger anhaltender Süße oder gegebenenfalls auch durch Abmischung mit natürlichem Zucker weitgehend ausgleichen. Zur Verbesserung der Saccharoseähnlichkeit wird in der DE-AS 26 28 294 eine Süßstoffmischung aus 3,4-Dihydroxy-6-methyl-1,2,3-oxathiazin-4-on-2,2-dioxid (Acesulfam) mit einem anderen der bekannten Süßstoffe wie Aspartam, Saccharin und Cyclamat vorgeschlagen. In der EP 3 19 984 B 1 wird die Saccharoseähnlichkeit des Geschmacks von Süßstoffmischungen noch weiter verbessert, indem mindestens ein synthetischer Süßstoff mit entaromatisierten und konzentrierten Fruchtzubereitungen von 60 bis 80° Brix abgemischt wird. Hierbei wird durch die Abmischung von Süßstoff mit süßschmeckenden Kohlehydraten eine Verbesserung des Geschmacks von Süßstoffmischungen erreicht. Die JP 59-154956 offenbart ein Süßungsmittel aus Acesulfam-K und Fructose. Ferner offenbart die DE-OS 33 31 517 Süßungsmittel, die aus Gemischen von Acesulfam-K unter anderem mit Lactose oder Fructose bestehen. Auch hier soll durch die Abmischung von Süßstoffen mit süßschmeckenden Kohlehydraten eine Verbesserung der Saccharoseähnlichkeit erreicht werden.

Rhamnose ist bekannt als Ausgangsprodukt für die Herstellung von 2,5-Dimethyl-4-hydroxy-3(2H)-furanon. Diese Substanz ist eine wichtige Impactkomponente in vielen Fruchtaromen und findet daher vielfach Verwendung bei Kompositionen von Aromen für die Lebensmittelindustrie. Darüber hinaus ist bekannt, daß Rhamnose als Ausgangsstoff für Reaktionsaromen eingesetzt werden kann. Neben der Bildung von Furaneol ist auch die Bildung von 5-Methylfurfural und anderer Maillard-Reaktionsprodukte aus Rhamnose und stickstoffhaltigen Verbindungen in der Literatur beschrieben (A. F. Pisarnitskii et al., Applied Biochemistry and Microbiology 28 (1), 97 bis 100 (1992); R. Silwar, Zeitschrift für Lebensmitteluntersuchung und -Forschung 195 (2), 112 bis 119 (1992)).

Rhamnose besitzt eine wesentlich geringere Süßkraft als Saccharose. Daher wird diese Verbindung auch nicht zum Süßen von Lebensmitteln eingesetzt.

In der Literatur ist häufig der Begriff der "vollen Süße" beschrieben (von Rymon Lipinski und Schiwerk: Handbuch Süßungsmittel, Behr's Verlag 1991; Nabors, L. O. and Gelardi R. W.: Alternative Sweeteners, Marcel Dekker Inc., 1991). Dieser Begriff soll ausdrücken, daß es sich um eine harmonische und körperreiche Süße handelt. Im Gegensatz hierzu wird eine "wäßrige Süße" als flach und körperlos umgeschrieben und ist mit der der Saccharose nicht annähernd vergleichbar.

Aufgabe der vorliegenden Erfindung ist es, ein Süßungsmittel bereitzustellen, das eine harmonische und körperreiche Süße aufweist, die mit der Saccharose vergleichbar ist und das ferner die Geschmacksqualität der mit ihm gesüßten Lebensmittel durch Verstärkung der Aromaentfaltung verbessert, sowie ein Verfahren zu dessen Herstellung und dessen Verwendung anzugeben.

Es wurde nun überraschenderweise festgestellt, daß Desoxyzucker, insbesondere Rhamnose oder Fucose, in geringen Einsatzkonzentrationen die Saccharoseähnlichkeit von Intensiv-Süßstoffen verbessern können.

Weiterhin zeigt sich, daß durch den Zusatz von Desoxyzuckern wie Rhamnose oder Fucose mit Süßstoffen gesüßte Lebensmittel besser schmecken. Es erfolgt eine vollere Entfaltung des Aromas. Neben der Verbesserung der Saccharoseähnlichkeit ergibt sich durch den Zusatz von Rhamnose auch eine Verbesserung der Geschmacksqualität mit Süßstoff gesüßter Lebensmittel. Diese Art der Aromaverstärkung durch den Zusatz von Rhamnose ohne Hitzeeinwirkung war bisher nicht bekannt.

Die gestellte Aufgabe wird demnach durch ein Süßungsmittel der eingangs genannten Art gelöst, das
a) mindestens einen Süßstoff oder eine Mischung verschiedener Süßstoffe und
b) mindestens einen Desoxyzucker
enthält.

Die Mischungskomponenten a) und b) liegen in einem Verhältnis innerhalb von 1:1000 bis 1000:1, vorzugsweise innerhalb von 10:1 bis 1:10 Gewichtsanteilen vor.

Die Komponente a) in dem erfindungsgemäßen Süßungsmittel ist vorzugsweise Acesulfam-K, Aspartam, Natriumcyclamat, Saccharin, Neohesperidin-Dihydrochalcon, Trichlorgalactosaccharose, Alitam, Thaumatin oder Steviosid. Es können sowohl ein als auch mehrere dieser Süßstoffe zur Abmischung mit der Komponente verwendet werden.

Vorzugsweise wird als Komponente a) Acesulfam-K allein, eine Mischung aus Acesulfam-K und Aspartam oder eine Mischung aus Acesulfam und Natriumcyclamat verwendet.

Die Komponente b) ist vorzugsweise Rhamnose oder Fucose.

Zur Herstellung von Rhamnose gibt es verschiedene Möglichkeiten. Rhamnose kann einerseits aus Bestandteilen pflanzlicher Materialien wie Rutin, Naringin oder Hesperidin nach Spaltung der glycosidischen Bindungen gewonnen werden. Andererseits kann Rhamnose auch biotechnisch aus pflanzlichen Rohstoffen hergestellt werden (US-Patent 49 33 281). Rhamnose wird meist als L-Rhamnose-Monohydrat verwendet. Diese Substanz liegt in kristalliner Form vor.

Zur Herstellung des o.g. Süßungsmittels können nun die einzelnen Süßstoffe oder Süßstoffmischungen mit Rhamnose in pulverförmiger Form gemischt werden. Andererseits läßt sich auch eine wäßrige Süßstofflösung aus den o.g. Süßstoffen und Rhamnose herstellen. Weiterhin kann diese Lösung sprühgetrocknet werden, um ein entsprechendes Süßungsmittelpulver mit verbessertem saccharoseähnlichem Geschmack zu erhalten.

Das so hergestellte Süßungsmittel kann unter anderem zur Herstellung von Tafelsüßstoffen eingesetzt werden.

Das Süßungsmittel gemäß der vorliegenden Erfindung kann ferner im Haushalt oder bei der industriellen Lebensmittelherstellung zum Süßen von Lebensmitteln, insbesondere zum Süßen von flüssigen Lebensmitteln wie Erfrischungsgetränken oder Molkerei- oder Eisprodukten sowohl in fester Form, als auch als Lösung eingesetzt werden. Daneben lassen sich auch alle anderen Lebensmittel wie Backwaren, Dessertspeisen und Feinkosterzeugnisse damit süßen.

Das Süßungsmittel gemäß der vorliegenden Erfindung wird in Lebensmitteln üblicherweise in einer Konzentration von 1 bis 5000 mg/kg verzehrsfertigem Lebensmittel eingesetzt. Der Mischungspartner b) wird dabei in vergleichbaren Konzentrationen verwendet, vorzugsweise in einer Konzentration von 100 bis 2000 mg/kg.

Wahlweise kann das erfindungsgemäße Süßungsmittel als fertiges Gemisch der Komponenten a) und b) oder es können die Komponenten a) und b) des Süßungsmittels nacheinander dem Lebensmittel zugegeben werden.

Die Erfindung wird anhand folgender Beispiele näher erläutert.

Es wurde jeweils sechs Testpersonen die Aufgabe gestellt, unterschiedlich gesüßte Lebensmittel geschmacklich zu bewerten.

Dabei wurde das Geschmacksprofil der Lebensmittel anhand von deskriptiven sensorischen Analysen bewertet. Dabei wurden insbesondere die Süßeeigenschaften anhand der Kriterien "volle Süße", "leere Süße", "spitze Süße" und "lang anhaltende Süße" bewertet. Ferner wurden Fremdgeschmackskomponenten wie adstringierend und bitter beurteilt. Diese Art der deskriptiven sensorischen Prüfmethode ist in der Literatur vielfach beschrieben (Stone, H. und J. L. Sidel, Sensory Evaluation Practise, Academic Press, 1993).

### Beispiele

1. Herstellung von Zitronenlimonade nach folgenden Rezepturen:
A)

| | |
|---|---|
| 1,9 g | Citronensäure-Monohydrat |
| 0,8 g | Zitronenaroma |
| 0,3 g | Acesulfam-K mit Wasser auf 1000 g auffüllen |

B) wie A) zuzüglich 500 ppm L-Rhamnose-Monohydrat
Ergebnis:

| | A) | B) |
|---|---|---|
| Süße: | leere, spitze Süße | volle, länger anhaltende Süße |
| Aroma: | Zitrone wahrnehmbar | Zitrone deutlich wahrnehmbar |

2. Herstellung von Furchtjoghurt nach folgenden Rezepturen:
A)

| | |
|---|---|
| 0,16 g/kg | Acesulfam-K |
| 0,16 g/kg | Aspartam |
| 70 g/kg | Erdbeerfruchtzubereitung |
| 930 g/kg | Magermilchjoghurt (1,5 % Fett) |

B) wie A) zuzüglich 400 ppm L-Rhamnose-Monohydrat
Ergebnis:

| | A) | B) |
|---|---|---|
| Süße: | leere Süße | volle Süße |
| Aroma: | deutlich wahrnehmbar | Erdbeeraroma tritt stärker hervor |

3. Herstellung von Magermilchgetränk nach folgenden Rezepturen:
A)

| | |
|---|---|
| 0,33 g/kg | Acesulfam-K |
| 0,11 g/kg | Aspartam |
| 60 g/kg | Flavoured Powder auffüllen auf 1000 g mit Magermilch (1,5 % Fett) |

B) wie A) zuzüglich 700 ppm L-Rhamnose-Monohydrat
Ergebnis:

| | A) | B) |
|---|---|---|
| Süße: | leere Süße | volle Süße |
| Aroma: | deutlich wahrnehmbar | kräftigeres Aroma |

4. Herstellung eines Apfelfruchtsaftgetränkes nach folgenden Rezepturen:
A)

| | |
|---|---|
| 15 g/l | Grundstoff Apfelaroma in entsprechender Menge |
| 1,0 g | Citronensäuremonohydrat |
| 0,2 g | Natriumsaccharin |
| 0,3 g | Citruspektin mit Wasser auf 1000 g auffüllen |

B) wie A) zuzüglich 300 ppm L-Rhamnose-Monohydrat
Ergebnis:

| | A) | B) |
|---|---|---|
| Süße: | sehr schneller Süßeeindruck, der auch schnell wieder abflacht | länger anhaltende Süße |
| Fremdgeschmackskomponenten: | bitterer und metallischer Nachgeschmack | kein bitteres Nachgeschmack feststellbar, metallischer Nachgeschmack weniger stark ausgeprägt |
| Aroma: | wahrnehmbar | stärkere Aromafreisetzung |

## Patentansprüche

1. Süßungsmittel mit verbessertem saccharoseählichem Geschmack, enthaltend
a) Acesulfam-K, eine Mischung aus Acesulfam-K und Aspartam oder eine Mischung aus Acesulfam und Natriumcyclamat
und
b) mindestens einen Desoxyzucker.

2. Süßungsmittel nach Anspruch 1, **dadurch gekennzeichnet, daß** die Mischungskomponenten a) und b) in einem Verhältnis von 1:1000 bis 1000:1 Gewichtsanteilen vorliegen.

3. Süßungsmittel nach Anspruch 2, **dadurch gekennzeichnet, daß** das Verhältnis der Komponenten a)/b) in einem Bereich von 10:1 bis 1:10 Gewichtsanteilen liegt.

4. Süßungsmittel nach einem der Ansprüche 1 bis 3, **dadurch gekennzeichnet, daß** die Komponente a) Acesulfam-K ist.

5. Süßungsmittel nach einem der Ansprüche 1 bis 3, **dadurch gekennzeichnet, daß** die Komponente a) eine Mischung aus Acesulfam-K und Aspartam ist.

6. Süßungsmittel nach einem der Ansprüche 1 bis 3, **dadurch gekennzeichnet, daß** die Komponente a) eine Mischung aus Acesulfam-K und Natriumcyclamat ist.

7. Süßungsmittel nach einem der Ansprüche 1 bis 6, **dadurch gekennzeichnet, daß** die Komponente b) Rhamnose ist.

8. Süßungsmittel nach einem der Ansprüche 1 bis 6, **dadurch gekennzeichnet, daß** die Komponente b) Fucose ist.

9. Süßungsmittel nach einem der Ansprüche 1 bis 8, **dadurch gekennzeichnet, daß** es als Trockenprodukt vorliegt.

10. Süßungsmittel nach einem der Ansprüche 1 bis 8, **dadurch gekennzeichnet, daß** es als wäßrige Lösung vorliegt.

11. Verfahren zur Herstellung des Süßungsmittels nach einem der Ansprüche 1 bis 10, **dadurch gekennzeichnet, daß** man die Komponenten a) und b) in pulverförmiger Form abmischt.

12. Verfahren zur Herstellung des Süßungsmittels nach Anspruch 9, **dadurch gekennzeichnet, daß** man eine wäßrige Lösung des Süßungsmittels gemäß Anspruch 10 sprühtrocknet.

13. Verwendung des Süßungsmittels gemäß eines der Ansprüche 1 bis 10 zur Herstellung von Tafelsüßstoffen.

14. Verwendung des Süßungsmittels gemäß eines der Ansprüche 1 bis 10 im Haushalt oder bei der industriellen Lebensmittelherstellung zum Süßen von Lebensmitteln wie z.B. von Backwaren, Dessertspeisen, Eiscreme oder Feinkosterzeugnissen, insbesondere von flüssigen Lebensmitteln, wie z.B. von Getränken und Milchprodukten.

15. Verwendung des Süßungsmittels nach Anspruch 14, **dadurch gekennzeichnet, daß** das Süßungsmittel in einer Konzentration von 1 bis 5000 mg/kg verzehrsfertigem Lebensmittel zugegeben wird.

16. Verwendung des Süßungsmittels nach Anspruch 14, **dadurch gekennzeichnet, daß** die Komponente a) des Süßungsmittels in einer Konzentration von 1 bis 5000 mg/kg, die Komponente b) in einer Konzentration von 100 bis 2000 mg/kg verzehrsfertigem Lebensmittel zugegeben wird.

17. Verwendung des Süßungsmittels nach einem der Ansprüche 14 bis 16, **dadurch gekennzeichnet, daß** dem Lebensmittel Komponente a) und Komponente b) des Süßungsmittels nacheinander zugegeben werden.

18. Verwendung des Süßungsmittels gemäß eines der Ansprüche 1 bis 10 zur Verbesserung der Aromaentfaltung in Lebensmitteln.

19. Verwendung der Komponente b) gemäß Ansprüchen 1, 7 oder 8 zur Verbesserung der Aromaentfaltung in Lebensmitteln.

## Claims

1. A sweetener having improved sucrose-like taste, containing
a) acesulfame-K, a mixture of acesulfame-K and aspartame or a mixture of acesulfame and sodium cyclamate
and
b) at least one deoxysugar.

2. The sweetener as claimed in claim 1, wherein the mixture components a) and b) are present in a ratio of 1:1000 to 1000:1 parts by weight.

3. The sweetener as claimed in claim 2, wherein the ratio of the components a)/b) is in a range from 10:1 to 1:10 parts by weight.

4. The sweetener as claimed in one of claims 1 to 3, wherein the component a) is acesulfame-K.

5. The sweetener as claimed in one of claims 1 to 3, wherein the component a) is a mixture of acesulfame-K and aspartame.

6. The sweetener as claimed in one of claims 1 to 3, wherein the component a) is a mixture of acesulfame-K and sodium cyclamate.

7. The sweetener as claimed in one of claims 1 to 6, wherein the component b) is rhamnose.

8. The sweetener as claimed in one of claims 1 to 6, wherein the component b) is fucose.

9. The sweetener as claimed in one of claims 1 to 8, wherein it is present as a dry product.

10. The sweetener as claimed in one of claims 1 to 8, wherein it is present as an aqueous solution.

11. A process for the preparation of the sweetener as claimed in one of claims 1 to 10, which comprises mixing the components a) and b) in pulverulent form.

12. The process for the preparation of the sweetener as claimed in claim 9, wherein an aqueous solution of the sweetener as claimed in claim 10 is spray dried.

13. Use of the sweetener as claimed in one of claims 1 to 10 for the production of artificial sweeteners for table use.

14. Use of the sweetener as claimed in one of claims 1 to 10 in the home or in industrial food production for sweetening foods such as bakery products, desserts, ice cream or delicatessen products, in particular liquid foods such as drinks and milk products.

15. Use of the sweetener as claimed in claim 14, wherein the sweetener is added in a concentration of 1 to 5000 mg/kg of ready-to-eat food.

16. Use of the sweetener as claimed in claim 14, wherein the component a) of the sweetener is added in a concentration of 1 to 5000 mg/kg and the component b) is added in a concentration of 100 to 2000 mg/kg of ready-to-eat food.

17. Use of the sweetener as claimed in one of claims 14 to 16, wherein component a) and component b) of the sweetener are added to the food sequentially.

18. Use of the sweetener as claimed in one of claims 1 to 10 for improving the flavor development in foods.

19. Use of the component b) as claimed in claim 1, 7 or 8 for improving the flavor development in foods.

## Revendications

1. Edulcorant à saveur de type saccharose améliorée, contenant
a) de l'acésulfame-K, un mélange d'acésulfame-K et d'aspartame ou un mélange d'acésulfame et de cyclamate de sodium.
et
b) au moins un dérivé désoxy de sucre.

2. Edulcorant selon la revendication 1, **caractérisé en ce que** les composants a) et b) du mélange sont présents en un rapport de 1:1000 à 1000:1 parties en poids.

3. Edulcorant selon la revendication 2, **caractérisé en ce que** le rapport des composants a) et b) se situe dans une plage allant de 10:1 à 1:10 parties en poids.

4. Edulcorant selon l'une quelconque des revendications 1 à 3, **caractérisé en ce que** le composant a) est l'acésulfame-K.

5. Edulcorant selon l'une quelconque des revendications 1 à 3, **caractérisé en ce que** le composant a) est un mélange d'acésulfame-K et d'aspartame.

6. Edulcorant selon l'une quelconque des revendications 1 à 3, **caractérisé en ce que** le composant a) est un mélange d'acésulfame-K et de cyclamate de sodium.

7. Edulcorant selon l'une quelconque des revendications 1 à 6, **caractérisé en ce que** le composant b) est le rhamnose.

8. Edulcorant selon l'une quelconque des revendications 1 à 6, **caractérisé en ce que** le composant b) est le fucose.

9. Edulcorant selon l'une quelconque des revendications 1 à 8, **caractérisé en ce qu'**il se présente sous la forme d'un produit sec.

10. Edulcorant selon l'une quelconque des revendications 1 à 8, **caractérisé en ce qu'**il se présente sous la forme d'une solution aqueuse.

11. Procédé pour la préparation de l'édulcorant selon l'une quelconque des revendications 1 à 10, **caractérisé en ce qu'**on mélange les composants a) et b) sous forme pulvérulente.

12. Procédé pour la préparation de l'édulcorant selon la revendication 9, **caractérisé en ce qu'**on sèche par atomisation une solution aqueuse de l'édulcorant selon la revendication 10.

13. Utilisation de l'édulcorant selon l'une quelconque des revendications 1 à 10, pour la préparation d'un édulcorant de table.

14. Utilisation de l'édulcorant selon l'une quelconque des revendications 1 à 10 pour un usage domestique ou dans la fabrication industrielle de produits alimentaires, pour l'édulcoration de produits alimentaires, comme par exemple des pâtisseries, desserts, crèmes glacées ou produits d'épicerie fine, en particulier de produits alimentaires liquides, comme par exemple de boissons et de produits lactés.

15. Utilisation de l'édulcorant selon la revendication 14, **caractérisé en ce que** l'édulcorant est ajouté à une concentration de 1 à 5 000 mg/g au produit alimentaire prêt à la distribution.

16. Utilisation de l'édulcorant selon la revendication 14, **caractérisé en ce que** le composant a) de l'édulcorant est ajouté à une concentration de 1 à 5 000 mg/g, et **en ce que** le composant b) est ajouté à une concentration de 100 à 2 000 mg/kg, au produit alimentaire prêt à la distribution.

17. Utilisation de l'édulcorant selon l'une quelconque des revendications 14 à 16, **caractérisé en ce que** le composant a) et le composant b) de l'édulcorant sont ajoutés l'un après l'autre au produit alimentaire.

18. Utilisation de l'édulcorant selon l'une quelconque des revendications 1 à 10, pour l'amélioration du développement d'arôme dans des produits alimentaires.

19. Utilisation du composant b) selon la revendication 1, 7 ou 8, pour l'amélioration du développement d'arôme dans des produits alimentaires.
